# EUROPEAN PATENT SPECIFICATION

(11) **EP 1 320 737 B1**
(45) Date of publication and mention of the grant of the patent: **07.04.2004**
(21) Application number: 01980361.8
(22) Date of filing: 10.09.2001
(51) Int. Cl.: G01M 3/24

(54) **METHOD FOR DETECTING FLUID LEAKS FROM UNDERWATER PIPELINES**
METHODE ZUR AUFSPÜRUNG VON LECKAGEN IN UNTERWASSERLEITUNGEN
PROCEDE DE DETECTION DE FUITES DE FLUIDE SUR DES CONDUITES SOUS-MARINES

(30) Priority: 22.09.2000 IT TO000886
(43) Date of publication of application: 25.06.2003
(73) Proprietor: Co.L.Mar, S.R.L., 19136 La Spezia (IT)
(72) Inventor: BARBAGELATA, Alessandro, I-19030 Arcola SP (IT); BARBAGELATA, Luigi, I-19021 Trebbiano di Arcola SP (IT)
(74) Representative: Lotti, Giorgio
(86) International application number: PCT/EP2001/010414
(87) International publication number: WO 2002/025239

(56) References cited:
- US-A- 4 785 659
- US-A- 5 557 969

## Description

The present invention relates to a method for detecting fluid leaks from underwater pipelines.

According to the description given in, for example, USA Patent No. 4,785,659, it is usual to detect fluid leaks from underwater pipelines by initially capturing a noise signal, which originates from the fluid leak, by means of using a sonic transducer, subsequently eliminating the audible portion of the sound band by means of subtracting a reference signal from the noise signal in order to obtain an ultrasonic signal, and then translating the ultrasonic signal to an audible sound band, and finally amplifying the resulting signal in order to send it to a control panel which may be either sonic or visual.

The method described above presents some inconveniences which are due to the low level of accuracy involved and the low resolution of the data retrieved, and which are also due to the inefficient visualisation of the acquired signal and the relative frequency spectrum.

The aim of the present invention is to provide a method for detecting fluid leaks from underwater pipelines, which will be free of the above-mentioned inconveniences and which will also permit the retrieval of data in a way which is totally independent of, the conditions contingent upon the retrieval.

According to the present invention, a method for detecting fluid leaks from underwater pipelines will be provided, comprising an acquisition phase of an acoustic signal in an area surrounding an underwater pipeline, a transmission phase of the said signal to a processing unit of the signal itself, and a processing phase of the said signal; the method being characterised by the fact that the processing phase comprises an elimination phase from the said signal of frequencies outside a certain frequency range in order to obtain a working band of a frequency within the range itself, and a translation phase of the working band to lower frequencies in order to obtain two quadrature signals which have half the band width of the band around a zero frequency.

The invention will now be described with reference to the attached drawings, which illustrate a non-limiting embodiment of the present invention, and in which:
- FIGURE 1: shows a diagram of a preferred form of embodiment of device for detecting fluid leaks from underwater pipelines by means of the method described in the present invention; and
- FIGURE 2: shows a diagram of a calculating unit, which is part of the device illustrated in FIGURE 1.

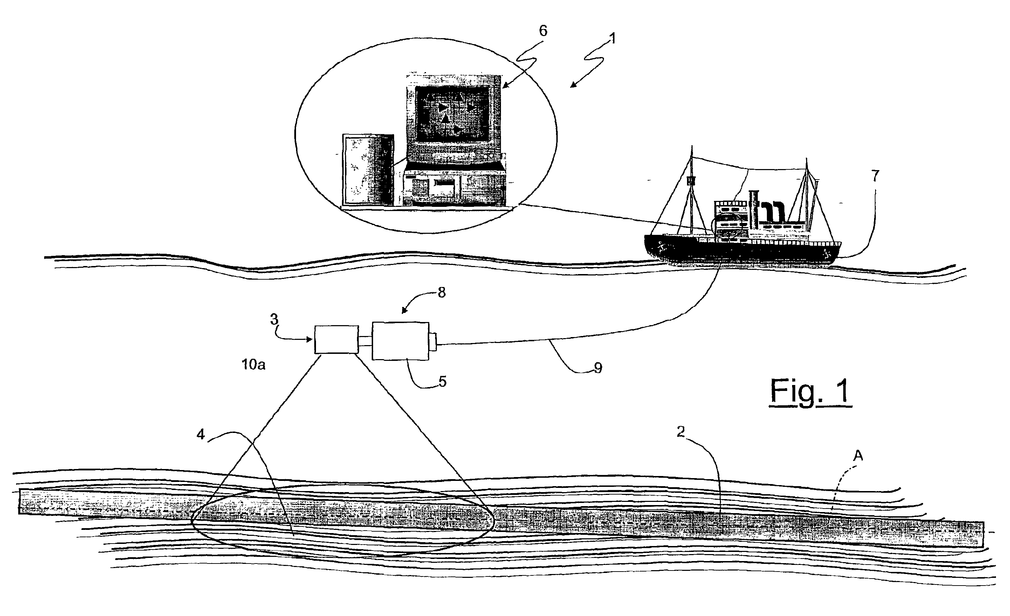

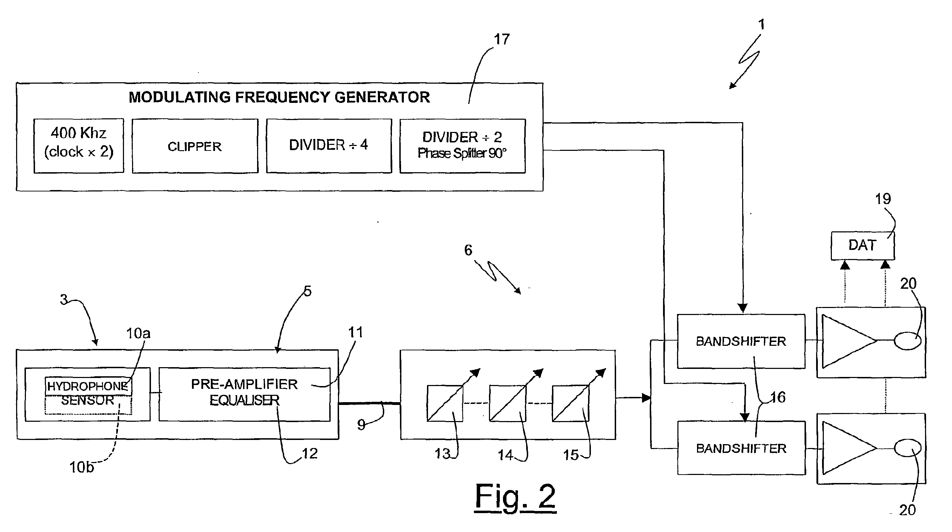

With reference to FIGURES 1 and 2, the number 1 refers to a device for detecting fluid leaks from underwater pipelines in its entirety.

The device 1 comprises an acquisition device 3 for acoustic signals which is suitable for sounding an area 4 surrounding the pipeline 2, and a transmitting device 5 which is suitable for transmitting the acquired signals to a processing unit 6, which is part of the device 1 itself, and which is installed on a vessel 7, unlike the devices 3 and 5, which are, instead, installed inside a watertight submersible element 8, and which are connected to the unit 6 by means of a connection and transmission cable 9.

As regards the acquisition of the signals from the area 4, which may be carried out either statically or dynamically, which means to say by advancing the element 8 along a longitudinal axis A of the pipeline 2 in either a gradual or a continuous fashion, the acquisition device 3 comprises a beam hydrophone 10a, the shape and direction of which are selected in function of certain parameters, among which are cited the following for reasons of clarity: the modus operandi selected, the condition of the pipeline 2, and the internal pressure in the pipeline 2 itself. It is also possible to use a hydrophone 10a with a fan-shaped beam, with a conical beam, or a conical beam with a selectable opening, and an accurate choice of the type of hydrophone means that it is possible to increase the signal/noise ratio.

The transmitting device 5 comprises a pre-amplifier 11 which is input connected to the device 3, and an equaliser 12 which is input connected to the pre-amplifier 11 and which is output connected to the cable 9.

The cable 9 performs the function of towing the element 8 and it is provided with the necessary conductors as well as with a Kevlar strength member. In the case of inspections which are carried out by means of cable-guided submarines, the cable 9 is not used, and the signals are carried to the surface by means of the vessel's own cable.

The unit 6 is suitable for eliminating from the frequency signal received by the device 5 all the frequencies outside a determined frequency range in order to obtain a working band at frequencies comprised within the range itself, and is also suitable for translating the working band to lower frequencies in order to obtain two quadrature signals with half of the band width around a zero frequency.

In this way, the two signals may be acquired as two audio signals on an audio card installed in a computer, while software installed in the computer provides for the reconstruction of the original signal by calculating the spectogram and the strength of the signal within the relevant band.

These values are calculated every second and are plotted on a graph. A third graph plots the strength of the signal in function of both frequency and time.

The unit 6 comprises a reception device 13 which presents a cut-off frequency equal to 1 kHz, an amplifying device 14 for the received signal which presents an amplifying value comprised between 0 dB and 60 dB, and a filter 15 which defines the above-mentioned frequency range with a minimum frequency value equal to 30 kHz and a maximum frequency value equal to 70kHz.

In fact, any eventual fluid leak from the pipeline 2 consists of the transition of a mass of fluid from an environment inside the pipeline 2 itself and which presents a relatively high pressure, to an environment outside the pipeline 2 itself, and near to or surrounding it, and which presents a relatively low pressure. As a consequence, any fluid which eventually leaks from the pipeline 2 will expand to create a wave of pressure, which means that it will produce a wide band signal which is generally within the range between 30 kHz and 7dkHz.

The unit 6 is suitable for extracting the noise of the fluid leak, which means to say the signal, from the noise in the surrounding environment, which means to say the actual environmental noise, emphasising as much as possible the ratio between the signal and the noise, even though the signal is generally weak and even though it tends to diminish even further on its journey from the fluid leak to the device 3.

The unit 6 also comprises a bandshifter 16, which is input connected to the filter 15 and to a frequency modulating generator 17, and it is suitable for translating the above-mentioned working band to lower frequencies, thus rendering compatible to each other the sample speed, the clock speed of an electronic processor 18 which is part of the unit 6 itself, and the amount of memory necessary for carrying out an analogical/digital conversion of the signal.

The unit 6 also comprises a digital recorder 19 and an audio device 20 inside the processor 18, the first of which is suitable for receiving and recording the above-mentioned two signals which originate in the bandshifter 16, and the second of which, together with the software installed in the processor 18 itself, is capable of reconstructing the signal as it was before it entered the bandshifter 16, and which permits the monitoring of the acoustic energy in function of the unit of time, the amplitude in function of the frequency, and the amplitude in function of the frequency and the unit of time of the reconstructed signal.

It is easy to deduce, from the foregoing description, how the device 1 for detecting fluid leaks in underwater pipelines functions and so no further details are required. For reasons of clarity, however, it should be briefly pointed out that during the advance of the element 8 along the pipeline 2, the signal detected by the device 3 is transmitted from the device 5 to the unit 1, from where it is processed by means of the reception device, the amplifier, the filter and the bandshifter in order to be send to the recorder and the electronic processor in such a way as to be able to view all the data in graph form on the monitor.

It should also be pointed out that all the data processed by the processor 18 is recorded so that it may be viewed at a later time' in order to permit an even more in-depth analysis.

## Claims

1. Method for detecting fluid leaks from underwater pipelines comprising an acquisition phase of an acoustic signal in an area surrounding an underwater pipeline, a transmission phase of the said signal to a processing unit of the signal itself, and a processing phase of the said signal; the method being **characterised by** the fact that the processing phase comprises an elimination phase from the said signal of frequencies outside a certain frequency range in order to obtain a working band of a frequency within the range itself, and a translation phase of the working band to lower frequencies in order to obtain two quadrature signals which have half the band width of the band around a zero frequency.

2. Method according to Claim 1, **characterised by** the fact that the said processing phase comprises a digital recording phase of the two quadrature signals, and a transmission phase of the two quadrature signals themselves to an audio acquisition device which is part of the said processing unit.

3. Method according to Claim 2, **characterised by** the fact of comprising a monitoring phase of the acoustic energy in function of the unit of time, of the amplitude in function of the frequency, and of the amplitude in function of the frequency and of the unit of time of a signal which is outgoing from the said audio device.

4. Method according to Claim 3, **characterised by** the fact of comprising a generating phase of two two-dimensional graphs and a three-dimensional graph in order to highlight both the presence of an abnormal signal and the strength and shape of the spectrum of the same signal; a first two-dimensional graph plots the energy of the signal in function of the time and within a selectable band, a second two-dimensional graph plots the spectrum of the signal, and the three-dimensional graph plots the strength of the signal in function of the time and frequency.,

5. Method according to Claim 4, **characterised by** the fact of comprising a recording phase of the detected signal and the data processed from this for a subsequent analysis of the data itself.

6. Method according to Claim 1, **characterised by** the fact that the said determined frequency range presents a minimum frequency which is equal to 30 kHz and a maximum frequency which is equal to 70kHz.

7. Method according to Claim 1, **characterised by** the fact that the said processing phase comprises a reception phase of the said signal via reception means which present a cut-off frequency which is equal to 1 kHz, and an amplifying phase of the received signal via amplifying means which present an amplification value which is variable between 0 and 60 dB.

8. Method according to Claim 1, **characterised by** the fact that the said acquisition phase of the acoustic signal comprises a gradual advancing phase of a conical beam hydrophone along the said pipeline.

9. Method according to Claim 1, **characterised by** the fact that the said acquisition phase of the acoustic signal comprises a continuous advancing phase of an acoustic sensor parallel to said pipeline.

## Patentansprüche

1. Verfahren zum Aufspüren von Fluidlecks in Unterwasserpipelines umfassend eine Phase zum Erfassen eines akustischen Signals in einem eine Unterwasserpipeline umgebenden Bereich, eine Phase zum Übertragen des Signals zu einer Signalverarbeitungseinheit und eine Signalverarbeitungsphase, wobei das Verfahren **dadurch gekennzeichnet ist, dass** die Verarbeitungsphase eine Phase umfasst, in der das Signal von Frequenzen außerhalb eines bestimmten Frequenzbereichs bereinigt wird, um einen Arbeitsfrequenzbereich mit einer Frequenz innerhalb des Bereichs zu erhalten, und eine Umsetzungsphase des Arbeitsfrequenzbereichs zu niedrigeren Frequenzen umfasst, um zwei Quadratursignale zu erhalten, welche die halbe Bandbreite des Frequenzbandes um eine Nullfrequenz herum haben.

2. Verfahren nach Anspruch 1, **dadurch gekennzeichnet, dass** die Verarbeitungsphase eine digitale Aufzeichnungsphase der zwei Quadratursignale und eine Übertragungsphase der zwei Quadratursignale zu einer Audio-Erfassungseinrichtung, die Teil der Verarbeitungseinheit ist, umfasst.

3. Verfahren nach Anspruch 2, **dadurch gekennzeichnet, dass** es eine Überwachungsphase der akustischen Energie in Abhängigkeit von der Zeit, von der Amplitude in Abhängigkeit von der Frequenz und von der Amplitude in Abhängigkeit von der Frequenz und der Zeit eines von der Audio-Vorrichtung kommenden Signals umfasst..

4. Verfahren nach Anspruch 3, **dadurch gekennzeichnet, dass** sie eine Phase umfasst, in der zwei zweidimensionale Kurven und eine dreidimensionale Kurve generiert wird, um sowohl das Vorhandensein eines abnormen Signals als auch die Stärke und Form des Spektrums desselben Signals hervorzuheben, wobei eine erste zweidimensionale Kurve die Signalenergie in Abhängigkeit von der Zeit und innerhalb eines ausgewählten Bandes darstellt, eine zweite zweidimensionale Kurve das Signalspektrum darstellt und die dreidimensionale Kurve die Signalstärke in Abhängigkeit von der Zeit und der Frequenz darstellt.

5. Verfahren nach Anspruch 4, **dadurch gekennzeichnet, dass** es eine Aufzeichnungsphase des detektierten Signals und der hiervon erstellten Daten für eine nachfolgende Analyse der Daten umfasst.

6. Verfahren nach Anspruch 1, **dadurch gekennzeichnet, dass** der festgelegte Frequenzbereich eine minimale Frequenz besitzt, die 30 kHz beträgt und eine Maximalfrequenz aufweist, die 70 kHz ist.

7. Verfahren nach Anspruch 1, **dadurch gekennzeichnet, dass** die Verarbeitungsphase eine Phase zum Empfangen des Signals über Aufnahmemittel, die eine Grenzfrequenz von 1 kHz besitzen, und eine Verstärkungsphase des erhaltenen Signals mittels Verstärkungsmittel umfasst, die einen Verstärkungswert haben, der zwischen 0 und 60 dB veränderlich ist.

8. Verfahren nach Anspruch 1, **dadurch gekennzeichnet, dass** die Erfassungsphase des akustischen Signals eine Phase umfasst, bei der ein Hydrophon mit kegelförmigem Strahl schrittweise entlang der Pipeline bewegt wird.

9. Verfahren nach Anspruch 1, **dadurch gekennzeichnet, dass** die Erfassungsphase des akustischen Signals eine Phase umfasst, bei der ein akustischer Sensor kontinuierlich parallel zur Pipeline bewegt wird.

## Revendications

1. Procédé pour détecter des fuites de fluides sur des conduites immergées, comprenant une phase d'acquisition d'un signal acoustique dans une zone entourant une conduite immergée, une phase de transmission dudit signal à une unité de traitement du signal lui-même, et une phase de traitement dudit signal ; le procédé étant **caractérisé par le fait que** la phase de traitement comprend une phase d'élimination hors dudit signal de fréquences extérieures à une certaine gamme de fréquences de manière à obtenir une bande de travail d'une fréquence se situant à l'intérieur de ladite gamme, et une phase de transposition de la bande de travail à des fréquences inférieures de manière à obtenir deux signaux en quadrature qui ont la moitié de la bande passante de la bande autour d'une fréquence nulle.

2. Procédé selon la revendication 1, **caractérisé par le fait que** ladite phase de traitement comprend une phase d'enregistrement numérique des deux signaux en quadrature, et une phase de transmission des deux dits signaux en quadrature à un dispositif d'acquisition audio qui fait partie de ladite unité de traitement.

3. Procédé selon la revendication 2, **caractérisé par le fait qu'**il comprend une phase de surveillance de l'énergie acoustique en fonction de l'unité de temps, de l'amplitude en fonction de la fréquence, et de l'amplitude en fonction de la fréquence et de l'unité de temps d'un signal qui est produit par ledit dispositif audio.

4. Procédé selon la revendication 3, **caractérisé par le fait qu'**il comprend une phase de génération de deux graphiques bidimensionnels et d'un graphique tridimensionnel de manière à mettre en évidence, à la fois, la présence d'un signal anormal et l'intensité et la forme du spectre du même signal ; dans lequel un premier graphique bidimensionnel trace l'énergie du signal en fonction du temps et à l'intérieur d'une bande pouvant être sélectionnée, un deuxième graphique bidimensionnel trace le spectre du signal, et le graphique tridimensionnel trace l'intensité du signal en fonction du temps et de la fréquence.

5. Procédé selon la revendication 4, **caractérisé par le fait qu'**il comprend une phase d'enregistrement du signal détecté et des données traitées à partir de celui-ci pour une analyse ultérieure desdites données.

6. Procédé selon la revendication 1, **caractérisé par le fait que** ladite gamme de fréquences déterminée présente une fréquence minimale qui est égale à 30 kHz et une fréquence maximale qui est égale à 70 kHz.

7. Procédé selon la revendication 1, **caractérisé par le fait que** ladite phase de traitement comprend une phase de réception dudit signal par des moyens de réception qui présentent une fréquence de coupure qui est égale à 1 kHz, et une phase d'amplification du signal reçu par des moyens d'amplification qui présentent une valeur d'amplification qui est variable entre 0 et 60 dB.

8. Procédé selon la revendication 1, **caractérisé par le fait que** ladite phase d'acquisition du signal acoustique comprend une phase d'avancement progressif d'un hydrophone à faisceau conique le long de ladite conduite.

9. Procédé selon la revendication 1, **caractérisé par le fait que** ladite phase d'acquisition du signal acoustique comprend une phase d'avancement continu d'un capteur acoustique dans une direction parallèle à ladite conduite.
